Europäisches Patentamt

(19) European Patent Office

Office européen des brevets

(11) Publication number: **0 108 457**
**B1**

(12) **EUROPEAN PATENT SPECIFICATION**

(45) Date of publication of patent specification: **05.08.87**

(51) Int. Cl.⁴: **G 11 B 7/24, G 11 B 11/10**

(21) Application number: **83201568.9**

(22) Date of filing: **02.11.83**

(54) **Method for the production of an optical recording element.**

(30) Priority: **05.11.82 NL 8204291**

(43) Date of publication of application:
**16.05.84 Bulletin 84/20**

(45) Publication of the grant of the patent:
**05.08.87 Bulletin 87/32**

(84) Designated Contracting States:
**DE FR GB IT NL SE**

(56) References cited:
**CA-A- 805 652**
**GB-A-2 079 031**
**GB-A-2 084 786**

**PATENTS ABSTRACTS OF JAPAN, vol. 6, no. 112 (P-124)990r, 23rd June 1982, page 34 P 124**

**PATENTS ABSTRACTS OF JAPAN, vol. 6, no. 156 (P-135)1034r, 17th August 1982, page 155 P 135**

**PATENTS ABSTRACTS OF JAPAN, vol. 5, no. 196, 12th December 1981, page 161 P 93**

**JOURNAL OF APPLIED PHYSICS, vol. 53, no. 6, June 1982, pages 4485-4494, American Institute of Physics, New York, US M. MANSURIPUR et al.: "Signal and noise in magneto-optical readout"**

(73) Proprietor: **N.V. Philips' Gloeilampenfabrieken**
**Groenewoudseweg 1**
**NL-5621 BA Eindhoven (NL)**

(72) Inventor: **Peeters, Winfried Lodewijk**
**c/o INT. OCTROOIBUREAU B.V. Prof. Holstlaan 6**
**NL-5656 AA Eindhoven (NL)**
Inventor: **Ponjeé, Johannes Jacobus**
**c/o INT. OCTROOIBUREAU B.V. Prof. Holstlaan 6**
**NL-5656 AA Eindhoven (NL)**
Inventor: **Martens, Jan Willem Dirk**
**c/o INT. OCTROOIBUREAU B.V. Prof. HOlstlaan 6**
**NL-5656 AA Eindhoven (NL)**

(74) Representative: **Weening, Cornelis et al**
**INTERNATIONAAL OCTROOIBUREAU B.V. Prof. Holstlaan 6**
**NL-5656 AA Eindhoven (NL)**

(56) References cited:

**IEEE TRANSACTIONS ON MAGNETICS, vol. MAG-5, no. 3, September 1969, page 289, New York, US J.E. MEE et al.: "Magnetic oxide films"**

## Description

The invention relates to a method for the production of an optical recording element. The element to be manufactured comprises a transparent supporting plate which on one side has a recording layer in which information can be written and read by means of laser light which is focussed on the recording layer *via* the supporting plate and a reflecting optical structure of reflection areas which are situated alternately at a higher level and at a lower level and which can be read optically, in which the optical structure comprises a layer of synthetic resin having a spiral-like groove or a groove built up from concentric circles, and a reflection layer provided over the whole surface of the layer of synthetic resin.

The groove mostly is called servotrack or guide track. The groove and the higher situated parts of the optical structure besides the groove form reflecting areas situated alternately at a higher level and at a lower level. A laser light bundle with which the optical structure is screened or read, will follow the groove on the basis of reflection differences of the structure at the site of the groove and at the site of the higher situated parts besides the groove. The groove itself may be provided with information areas (servo areas) situated alternately at a higher and lower level. Such servo areas can also be read optically by means of laser light and comprise information f.e. for the steering of the laser light bundle with which the structure is read or with which information is recorded. Information is recorded in the recording layer by means of comparatively energy-rich laser light, modulated in accordance with the information to be recorded. The recorded information (bits) can be read by means of laser light.

This type of an optical recording element is known from published Netherlands Patent Application 8005693 (EP—A—50388) and published Netherlands Patent Application 7805605 in the name of Applicants. The known recording element is manufactured in that a transparent supporting plate of, for example, glass is provided on one side with a reflecting optically readable structure comprising a light-cured monomer in which a groove is provided. The layer of cured monomers is coated over the whole surface with a recording layer which has a reflecting capacity with respect to the laser light with which the optical structure is read.

The disadvantage is that the recording layer has to be provided at a low temperature. The layer of synthetic resin carrying the servo track is very sensitive to temperature. At high temperatures of more than, for example 200°C, or in particular more than 400°C, the servo track or even the whole layer of resin is deformed or attacked. So when providing the recording layer the temperature of the layer of resin may not increase to too high a value. It has been found in practice that in general sputtered layers or vapour-deposited layers of, for example, metals, metal alloys, chal- cogenic substances and the like do not attack or deform the layer of cured monomer (synthetic resin). The choice of the material of the recording layer, however, is restricted.

In the above-mentioned known recording element the recording layer also serves as a reflection layer of the reflecting optical structure. The recording layer must have adequate reflecting capacity with respect to laser light, at the expense of the absorption of laser light in said layer. As a result of this the efficiency of recording information, that is to say the efficiency of formation of information bits in the recording layer, is reduced.

The above mentioned disadvantage of a limited choice of the material of the recording layer also holds true for the optical recording element described in the UK Patent Application GB 2.084.786, particularly Fig. 4. This known recording element is produced by providing a substrate (12) on a major surface with a plurality of identations. These identations are formed by a replication process from a master or during the compression moulding of the substrate (column 2 lines 86—93). Said major surface of the substrate subsequently is covered by a reflection layer (52), a spacer layer (72) of poly-α-methylstyrene, an absorptive layer (78), a capping layer 82 and a relatively thick overcoat layer (46). The absortive (recording) layer thus has to be applied onto the spacer layer of poly-α-methylstyrene which must be realized at a relatively low temperature thereby limiting the choice of the material of the recording layer. Furthermore this known recording element cannot be irradiated with laser light *via* the substrate due to the presence of the reflecting layer (52) between substrate and recording layer. Therefor writing and reading of information must be carried out in the air-incident mode. This requires the presence of an extra overcoat layer (46) in order to bring dust particles outside the focal depth of the objective lens which focusses the writing- or reading-laser light onto the absorptive (recording) layer.

It is the object of the invention to provide a method for the production of an optical element which does not exhibit the above-mentioned disadvantages and is particularly suitable for application of recording layers which are provided at a high temperature.

This object is achieved by a method for the production of an optical recording element comprising the steps of providing a transparent supporting plate (1) having a flat major surface, applying a recording layer (2) onto said flat surface, whereby in said recording layer information can be written and read by means of laser light focussed onto the recording layer *via* the supporting plate, applying onto the major outer surface of said recording layer a reflecting optical structure (11) having reflection areas situated alternately at a higher (13) and at a lower (14) level, which can be read optically, said reflecting optical structure being obtained by first depositing a resin layer (4), introducing a spiral-like groove (12) in said layer or a groove built up from concentric circles and applying a reflection layer (10) over the whole surface of said layer of synthetic resin.

The reflective optical structure of the element produced according to the invention is preferably read in reflection *via* the transparent supporting plate (substrate) and the recording layer, reading being based on differences in amplitude between the reflected laser light originating from the reflection areas at a higher level and that of the reflection areas at a lower (groove) level. Due to the level difference, reading on the basis of differences in phase of the reflected laser is also possible. The reading laser light is so weak that no recording of information takes place in the recording layer. Reading *via* the substrate presents the advantage that the dust particles or scratches present on the surface of the substrate do not adversely influence the quality of the reading because the surface of the substrate falls beyond the depth of focus of the objective with which the reading laser light is focused on the optical structure.

The recording layer applied may be, for example, a layer of a metal or a metal alloy or a layer of a chalcogenide, for example, a layer on the basis of a tellurium and/or selenium alloy.

By exposure to energy-rich laser light, a change (information bit) is produced in the recording layer at the exposed and consequently heated sites which afterwards can be traced by means of weak laser light. Such a change is, for example, the formation of a hole or cavity. When an amorphous ferromagnetic material is used, a variation in the magnetic properties is produced. The recording layer is exposed *via* the supporting plate (substrate). The quality of the recording and of the reading of the recorded information then is independent of the quality of the surface of the substrate.

In a favourable embodiment of the method according to an invention, a recording layer of an inorganic oxide is applied. A layer of an inorganic oxide is provided at a high temperature of the supporting plate, for example at a temperature of 500°C. The supporting plate must be capable of withstanding said temperature and is preferably manufactured from glass or quartz.

Preferably a magneto-optical layer of an inorganic oxide is applied as a recording layer. A very suitable layer is a layer of a ferrite, in particular a cobalt ferrite. A readily useful cobalt ferrite satisfies the formula $CoFeO_4$. When such magnetizable oxides are used in the method in accordance with the invention, high values of the Kerr rotation angle are obtained and consequently an excellent signal-to-noise ratio of the information bits written in the recording layer. Preferably the recording layer of ferrite forms an antireflection coating for the reflection layer at the area of the groove in the layer of synthetic resin.

In that part of the recording layer which is coated by the reflection areas of the lower level, hence at the area of the groove, an antireflection condition prevails, which means that the laser light incident on the element and the laser light emanating from the element as a result of reflection by the reflection areas of lower level, extinguish each other for a considerable part, for example, 80%. Due to both the absorbing character and the transparent character of a ferrite an antireflection condition can be obtained by a correct choice of the layer thickness which is matched to the optical constants of the further materials of the element, such as the supporting plate and the reflecting optical structure. With a glass supporting plate and an Ag reflection layer the thickness of a $CoFe_2O_4$ layer is 0.21 µm.

At the location of the reflection areas of higher level the recording element produced in accordance with the invention does not show an antireflection condition. As a result of this an excellent signal-to-noise ratio is obtained both upon reading the reflecting optical and upon reading the information bits in the recording layer. Furthermore, the quantity of laser light energy necessary for writing information in the recording layer is minimum.

In a further preferred embodiment of the method in accordance with the invention a transparent intermediate layer is interposed between the recording layer and the reflecting optical structure.

By choosing the thickness of both the recording layer and of the transparent intermediate layer in accordance with the value of the optical constants, such as refractive indes, of the other layers of the recording element, an antireflection situation at the groove area is obtained. In case a ferrite layer is used as a recording layer which as such satisfies the condition of antireflection, the transparent intermediate layer may not disturb the condition of antireflection and the thickness of the intermediate layer must be equal to N. $\lambda/2n$, there N is an integer, $\lambda$ is the wavelength of the laser light used and $n$ is the refractive index.

For the conditions of antireflection in an assembly of layers which comprise an absorbing layer, a transparent layer and a reflecting layer, in which the absorbing layer and the transparent layer form an antireflection coating for the reflecting layer, reference may be made to A. E. Bell and F. M. Spong, Antireflection Structure for Optical Recording, IEEE Journal of Quantum Electronics, Vol. Q.E. 14, No. 7, July 1978, *pp.* 487—495.

In a further preferred embodiment of the method in accordance with the invention the reflecting optical structure is obtained by first depositing a layer (4) of photoresist, irradiating the layer of photoresist through a mask (5) having apertures (8) or directly with modulated light, developing the photoresist layer so as to form spiral grooves (12) or grooves built up from concentric circles and applying a metal layer (10). The groove formed in the layer of photoresist preferably extends through the whole thickness of said layer. No photoresist material is present between the groove and the underlying layer, either the transparent intermediate layer of the recording layer.

An optical recording element produced in accordance with the invention which is particularly suitable for practical application, may comprise a supporting plate of glass which on one side is provided successively a layer of a cobalt ferrite, a transparent intermediate layer, a layer of a photoresist having a groove extending through the whole thickness of the photoresist layer and a metal reflecting layer provided over the photoresist layer and groove.

The invention will be described in greater detail with reference to the drawing, in which:

Figure 1 is a cross-sectional view of a part of a recording element in a first stage of the method according to the invention,

Figure 2 is a cross-sectional view of the same part of the recording element obtained after manufacture has been completed.

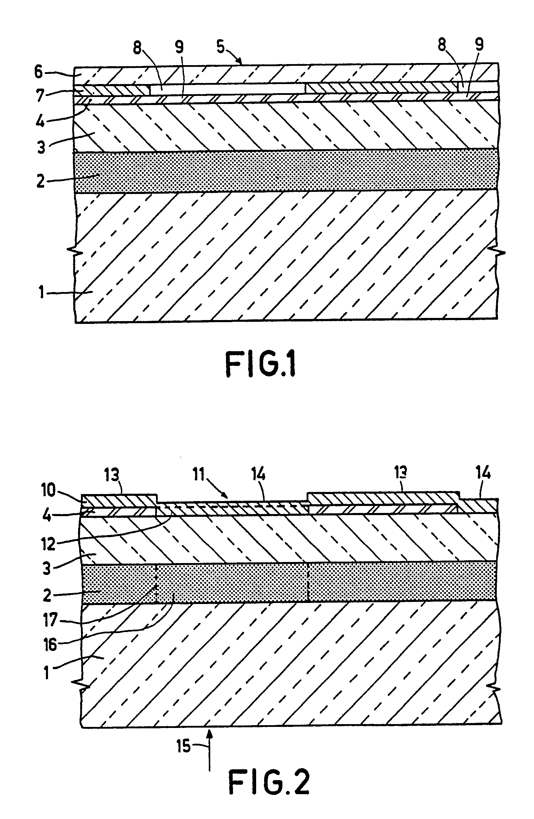

Reference numeral 1 in Figure 1 denotes a transparent supporting plate which is preferably manufactured from glass or quartz and has a thickness of 1.2 mm. The supporting plate is provided on one side with the recording layer 2 of $CoFe_2O_4$. For this purpose the supporting plate is heated at 500°C and a solution of ferric acetylacetonate and cobalt acetylacetonate in proponol is then sprayed over the surface of the supporting plate. After evaporating the solvent and decomposing the salt, a layer of $CoFe_2O_4$ is obtained in a layer thickness of 0.21 µm. A transparent intermediate layer 3 is provided on the recording layer 2. The intermediate layer may be of a synthetic resin. An intermediate layer of synthetic resin is provided by spraying a solution of the synthetic resin in an inorganic solvent over the surface of the recording layer 2 and evaporating the solvent. The intermediate layer 3 in the embodiment shown in the Figure is a sputtered $SiO_2$ layer in a thickness of 0.26 µm.

A layer 4 of a positive photoresist material which after drying has a thickness of 70 nm is provided on the intermediate layer 3. Photoresist layer 4 is covered with a chromium mask 5, known as LRC (low reflectant chromium) mask, which consists of a glass plate 6 and a chromium layer 7 which is provided thereon and which comprises apertures 8. The apertures form a spiral-like groove or a groove consisting of concentric circles.

Photoresist layer 4 is exposed to UV-light *via* the mask 5. The mask is removed and the photoresist layer 4 is developed, the exposed parts 9 of the photoresist layer which correspond to the aperture 8 in the chromium layer 7 going into solution. It is also possible to expose the photoresist layer directly, so without the use of a mask, to UV-light which is modulated in accordance with the information to be written. Hence a direct exposure in the form of a pattern succeeded by the development step. Finally, the developed photoresist layer is provided with a metal layer 10 (Figure 2) of, for example, Ag, Al or Cu. A good metal layer is notably an Ag-layer. The resulting optical recording element is shown in Figure 2 in which the same reference numerals are used as in Figure 1. The optical structure present in the element is referenced 11. This structure consists of a photoresist layer 4 which has the above-mentioned groove 12 in a groove depth which is equal to the thickness of the photoresist layer 4. The whole surface of the photoresist layer 4 with groove 12 is coated with the metal layer 10 so that the structure 11 comprises alternately reflection areas at a higher level 13 and reflection areas at a lower level 14. The optical structure 11 is read in reflection *via* the substrate 1 by means of weak laser light which is focused on the optical structure in the direction denoted by the arrow 15. At the location of the deflection areas at the lower level 14 the element shows an antireflection condition, that is to say that the laser light incident on the element and the laser light emanating from the element as a result of reflection against the reflection areas 14 extinguish each other for a considerable part. At the location of the reflection area at the higher level 13 such an antireflection does not exist. As a result of this the optical structure shows an excellent signal-to-noise ratio upon reading. Information is recorded in the recording layer 2 in the area 16 present between the broken lines 17. This area is covered by the reflection area of the low level 14 immediately above the intermediate layer 2. In this part of the element, as mentioned above, an antireflection condition prevails, or in other words there is an optical resonant cavity. The information is recorded by focusing energy-rich laser light *via* the substrate 1 in the direction of the arrow 15 on the recording layer so that in the exposed places the Kerr rotation of the magnetic material changes sign. Upon recording in the area 16 of recording layer 2 an optical signal-to-noise ratio is obtained having a Kerr rotation of 3°.

**Claims**

1. A method for the production of an optical recording element comprising the steps of providing a transparent supporting plate (1) having a flat major surface, applying a recording layer (2) onto said flat surface, whereby in said recording layer information can be written and read by means of laser light focused onto the recording layer *via* the supporting plate, applying onto the major outer surface of said recording layer a reflecting optical structure (11) having reflection areas situated alternately at a higher (13) and at a lower (14) level, which can be read optically, said reflecting optical structure being obtained by first depositing a resin layer (4), introducing a spiral-like groove (12) in said layer or a groove built up from concentric circles and applying a reflection layer (10) over the whole surface of said layer of synthetic resin.

2. A method as claimed in Claim 1, wherein the reflecting optical structure is obtained by first depositing a layer (4) of photoresist, irradiating the layer of photoresist through a mask (5) having apertures (8) or directly with modulated light, developing the photoresist layer so as to form spiral grooves (12) or grooves built up from concentric circles and applying a metal layer (10).

3. A method as claimed in Claim 1 or Claim 2, wherein a transparent intermediate layer (3) is interposed between the recording layer (2) and the reflecting optical structure (11).

4. A method as claimed in Claim 1, 2 or 3, wherein a recording layer (2) of an inorganic oxide is applied.

## Patentansprüche

1. Verfahren zur Herstellung eines optischen Aufzeichnungselementes, dadurch gekennzeichnet, dass dieses Verfahren die folgenden Schritte aufweist: das Schaffen einer transparenten Trägerplatte (1) mit einer ebenen Hauptfläche, das Anbringen einer Aufzeichnungsschicht (2) auf der genannten ebenen Fläche, wobei in der genannten Aufzeichnungsfläche durch die Trägerplatte hindurch mittels auf die Aufzeichnungsschicht fokussierten Laserlichtes Information eingeschrieben und aus derselben ausgelesen werden kann, das auf der Aussenhauptfläche der genannten Aufzeichnungsschicht Anbringen einer reflektierenden optischen Struktur (11) mit optisch auslesbaren Reflexionsgebieten abwechselnd auf einem höheren (13) bzw. niedrigeren (14) Pegel, wobei die genannte reflektierende optische Struktur dadurch erhalten wird, dass zunächst eine Harzschicht (4) angebracht wird, in der genannten Schicht eine spiralförmige Rille (12) oder eine aus konzentrischen Kreisen aufgebaute Rille angebracht wird und dass über die ganze Oberfläche der genannten Schicht aus Kunstharz eine reflektierende Schicht (10) angebracht wird.

2. Verfahren nach Anspruch 1, dadurch gekennzeichnet, dass die reflektierende optische Struktur dadurch erhalten wird, dass zunächst eine Schicht (4) aus Photoresist angebracht wird, dass die Photoresistschicht durch eine Maske (5) mit einer Öffnung (8) hindurch oder unmittelbar mit moduliertem Licht bestrahlt wird, dass die Photoresistschicht zum Bilden von Spiralrillen (12) oder zum Bilden von aus konzentrischen Kreisen aufgebauten Rillen entwickelt wird und dass eine Metallschicht (10) angebracht wird.

3. Verfahren nach Anspruch 1 oder Anspruch 2, dadurch gekennzeichnet, dass zwischen der Aufzeichnungsschicht (2) und der reflektierenden optischen Struktur (11) eine Zwischenschicht (3) vorgesehen wird.

4. Verfahren nach Anspruch 1, 2 oder 3, dadurch gekennzeichnet, dass eine Aufzeichnungsschicht (2) aus einem anorganischen Oxid angebracht wird.

## Revendications

1. Procédé pour la réalisation d'un élément d'enregistrement optique comprenant les étapes de l'application d'une plaque de support transparente (1) présentant une surface principale plane, l'application d'une couche d'enregistrement (2) sur ladite surface plane, de l'information pouvant être inscrite et lue dans ladite couche d'enregistrement à l'aide de lumière laser focalisée sur la couche d'enregistrement par l'intermédiaire de la plaque de support, application, sur la surface extérieure principale de ladite couche d'enregistrement, d'une structure optique réflectrice (11) présentant des surfaces de réflexion situées alternativement à un niveau plus élevé (13) et à un niveau plus bas (14), pouvant être lues par voie optique, ladite structure optique réflectrice étant obtenue d'abord par dépôt d'une couche en matière synthétique (4), réalisation d'une rainure spiralée (12) dans ladite couche ou d'une rainure formée par des cercles concentriques et application d'une couche de réflexion (10) sur toute la surface de ladite couche en matière synthétique.

2. Procédé selon la revendication 1, dans lequel la structure optique réflectrice est obtenue par dépôt d'une couche (4) en photorésist, irradiation de la couche en photorésist à travers un masque (5) muni d'ouvertures (8) ou de façon directe à l'aide de lumière modulée, développement de la couche de photorésist afin de former des rainures spiralées (12) ou des rainures formées à l'aide de cercles concentriques et application d'une couche métallique (10).

4. Procédé selon la revendication 1 ou 2, dans lequel une couche intermédiaire transparente (3) est appliquée entre la couche d'enregistrement (2) et la structure optique réflectrice (11).

4. Procédé selon la revendication 1, 2 ou 3, selon lequel on applique une couche d'enregistrement 2 en oxyde inorganique.

FIG.1

FIG.2